(19) Europäisches Patentamt European Patent Office Office européen des brevets

(11) **EP 4 310 955 A1**

(12) **EUROPEAN PATENT APPLICATION**
published in accordance with Art. 153(4) EPC

(43) Date of publication:
**24.01.2024 Bulletin 2024/04**

(21) Application number: **22827539.2**

(22) Date of filing: **21.06.2022**

(51) International Patent Classification (IPC):
**H01M 4/587** (2010.01)   **H01M 10/0525** (2010.01)

(52) Cooperative Patent Classification (CPC):
**H01M 4/587; H01M 4/133; H01M 4/364;**
**H01M 4/583; H01M 10/0525;** H01M 2004/021;
H01M 2004/027; Y02E 60/10

(86) International application number:
**PCT/CN2022/100001**

(87) International publication number:
**WO 2022/268046 (29.12.2022 Gazette 2022/52)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.06.2021  CN 202110687403**

(71) Applicant: **Ningde Amperex Technology Limited**
**Ningde, Fujian 352100 (CN)**

(72) Inventors:
• **TANG, Jia**
**Ningde, Fujian 352100 (CN)**
• **HE, Lihong**
**Ningde, Fujian 352100 (CN)**
• **XIE, Yuansen**
**Ningde, Fujian 352100 (CN)**

(74) Representative: **Icosa**
**83 avenue Denfert-Rochereau**
**75014 Paris (FR)**

(54) **NEGATIVE ELECTRODE ACTIVE MATERIAL, SECONDARY BATTERY, AND ELECTRONIC DEVICE**

(57)    The present application relates to an anode active material, a secondary battery, and an electrical device, and the particles of the anode active material meet the following relationships: $0.1 \leq AR_{10} < 0.2$, $0.2 \leq AR_{50} < 0.4$, wherein the width to length ratio of the anode active material is $AR_{10}$ when the cumulative distribution of the particle volume is 10%, and the width to length ratio of the anode active material is $AR_{50}$ when the cumulative distribution of the particle volume is 50%. The lithium-ion battery containing the anode active material of the present application ensures high-energy density (volume, first cycle efficiency, and compacted density) and meets the requirements for the safety, cycle, and cyclic expansion.

FIG. 1

EP 4 310 955 A1

**Description**

**TECHNICAL FIELD**

The present application relates to the technical field of energy storage, and in particular, to an anode active material, a secondary battery, and an electrical device.

**BACKGROUND**

The lithium-ion battery industry has entered a period of rapid growth, with a fast-growing industry scale. As a kind of novel high-energy green battery, lithium-ion battery is widely used in notebook computers, cell phones, new energy electric vehicles, and other fields, which puts forward higher requirements on the energy density, cycle life, cost, and safety of the lithium-ion battery. Ensuring safety can enhance the competitiveness of the product, and improving energy density can enhance battery life, which in turn improves the comfort of the user experience.

As electronic devices such as cell phones and notebooks get thinner, the requirements for the expansion of batteries during cycling have become increasingly stringent. How to get a lithium-ion secondary battery that has high energy density (capacity, first cycle efficiency, compacted density), high cycle life, and high safety through the rational design of an anode is a common problem in the industry today.

**SUMMARY**

The present application aims to solve at least one of the problems existing in the relevant fields to some extent by providing an anode active material as well as a secondary battery and an electronic device using it.

According to the first aspect of the present application, the present application provides an anode active material, wherein the particles of the anode active material meet the following relationships: $0.1 \leq AR_{10} < 0.2$, $0.2 \leq AR_{50} < 0.4$, and wherein the width to length ratio of the anode active material is $AR_{10}$ when the cumulative distribution of the particle volume is 10%, and the width to length ratio of the anode active material is $AR_{50}$ when the cumulative distribution of the particle volume is 50%.

In some embodiments, the anode active material meets $0.4 \leq AR_{90} \leq 0.8$, and $AR_{90}$ represents the width to length ratio of the anode active material when the cumulative distribution of the particle volume is 90%. The percentage of elongated particles in the anode active material within the above range is relatively high, which can accelerate the rapid de-embedding of lithium ions and improve the rate performance of the secondary battery.

In some embodiments, $1.3 < AR_{90}/AR_{50} < 3.5$. Controlling the width to length ratio distribution of the particles of the anode active material within this range can further raise the de-embedding speed of lithium ions, increase the rate performance of the secondary battery, and improve the deformation of the anode.

In some embodiments, the anode active material meets at least one of the conditions (a) to (d): (a) the anode active material meets $1.5 \leq Dv99/Dv50 \leq 4.5$; (b) a specific capacity of the anode active material is greater than or equal to 355mAh/g; (c) a ratio of the 004 crystal plane diffraction peak area C004 to the 110 crystal plane diffraction peak area C110 of the anode active material meets $10 \leq C004/C110 \leq 40$; (d) a compacted density of the anode active material is greater than or equal to $1.90g/cm^3$.

In some embodiments, the anode active material meets $1.5 \leq Dv99/Dv50 \leq 4.5$. In the present application, because the long diameter of the particle is perpendicular to the current collector, when the particle size of the anode active material is too large, the prepared anode is prone to produce bumps on the surface of the anode active material layer after being treated with a certain pressure. The bumps will affect the appearance of the anode and are easy to precipitate lithium, further affecting the cycling performance of the battery. Besides, large particles are not conducive to the embedding and de-embedding of lithium ions.

In some embodiments, the ratio of the 004 crystal plane diffraction peak area C004 to the 110 crystal plane diffraction peak area C110 of the anode active material meets $10 \leq C004/C110 \leq 40$. The ratio within the range is more conducive to the embedding and de-embedding of lithium ions.

In some embodiments, the compacted density of the anode active material is greater than or equal to $1.90g/cm^3$. The compacted density of the anode active material is correlated to the pressure that the anode material can withstand after being prepared into an anode, and the material with high compacted density is beneficial for preparing batteries with high volume energy density.

In some embodiments, the anode active material comprises artificial graphite.

In some embodiments, the artificial graphite comprises at least one of needle coke artificial graphite, petroleum coke artificial graphite, and bitumen artificial graphite.

According to the second aspect of the present application, the present application provides a secondary battery, wherein the secondary battery comprises a cathode, a separator, an electrolyte, and an anode, the anode comprises an anode current collector and an anode active material layer, and the anode active material layer comprises the anode active material as claimed in the first aspect.

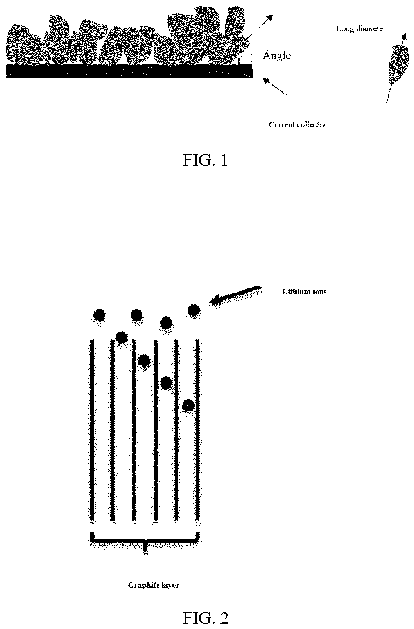

In some embodiments, the anode comprises the particles of the anode active material; a long diameter direction of the particles of the anode active material has an angle $\theta$ of $45°\leq\theta\leq90°$ with the anode current collector. In some embodiments, in the anode, the angle of distribution of the particles of the anode active material, as shown in FIG. 1, that are distributed on the current collector with a certain angle between the long diameter and the current collector, is greater than or equal to 45°. In this way, the path of embedding lithium ions into the anode active material layer is greatly shortened, which can effectively improve the embedding speed of lithium ions. At the same time, when embedding lithium ions, the acute angle between the long diameter and the current collector is greater than or equal to 45°. Therefore, as shown in FIG. 2, lithium ions are embedded into the anode active material layer from the short diameter direction, so the expansion perpendicular to the anode direction is greatly reduced.

In some embodiments, the anode comprises the particles of the anode active material; the long diameter direction of the particles of the anode active material has an angle $\theta$ of $55°\leq\theta\leq85°$ with the current collector. In some embodiments, in the anode active material layer, the angle $\theta$ between the long diameter direction of the anode active material and the anode current collector meets $45°\leq\theta\leq90°$.

In some embodiments, in the anode active material layer, the angle $\theta$ between the long diameter direction of the anode active material and the anode current collector meets $55°\leq\theta\leq85°$.

In some embodiments, the anode meets at least one of the conditions (e) to (f): (e) The ratio of the 004 crystal plane diffraction peak area C004 to the 110 crystal plane diffraction peak area C004 of the anode is $C004/C110\leq15$; (f) The electrolyte infiltration time of the anode is less than or equal to 2 min. The ratio within the range is more conducive to the embedding and de-embedding of lithium ions.

According to the third aspect, the present application provides an electrical device, which comprises the secondary battery as claimed in the second aspect.

## DETAILED DESCRIPTION

FIG. 1 is a schematic diagram of the distribution of the anode active material on the current collector according to an embodiment of the present application;

FIG. 2 is a schematic diagram of the embedding of anode lithium ions in the graphite layer according to an embodiment of the present application.

## DETAILED DESCRIPTION OF EMBODIMENTS

For ease of understanding the purpose, technical solutions and advantages of the present application, the following clearly and completely describes the technical solutions in conjunction with some embodiments of the present application rather than all of them. The embodiments are intended for descriptive purposes and to provide a basic understanding of the present application. The embodiments of the present application are not to be interpreted as a limitation on the present application. All technical solutions and embodiments provided and all other embodiments obtained by a person skilled in the technical field based on the present application are within the protection scope of the present application for.

Unless otherwise defined, all terms used herein have the same meanings as what is generally understood by a person skilled in the technical field of the present application. Unless otherwise specified, the values of the parameters mentioned herein can be measured by various measurement methods commonly used in the field (e.g., tests can be performed according to the methods given in the embodiments of the present application).

A list of items linked by the term "at least one of", or other similar terms may be any combination of the listed items. For example, if items A and B are listed, then the phrase "at least one of A or B" means A only; B only; or A and B. In another example, if items A, B, and C are listed, the phrase "at least one of A, B, or C" means A only; B only; C only; A and B (excluding C); A and C (excluding B); B and C (excluding A); or all of A, B, and C. Item A, Item B or Item C may contain a single component or multiple components.

To ensure high energy density (capacity, first cycle efficiency, compacted density) as well as safety, cycle and cyclic expansion, the present application, on the one hand, improves the specific capacity of the anode active material by selecting precursors which are more easily graphitized to meet the energy density demand. On the other hand, it simultaneously controls the particle shape of the anode active material to be elongated, paired with magnetization technology, so that the particles are distributed in a certain direction on the current collector, which can control the expansion of the anode while obtaining high energy density, thus greatly improving the fast charging and discharging performance of the lithium-ion battery.

I. Anode active material

The present application provides an anode active material, and the anode active material meets the following relationships: $0.1 \leq AR_{10} < 0.2$, $0.2 \leq AR_{50} < 0.4$, wherein the width to length ratio of the anode active material is $AR_{10}$ when the cumulative distribution of the particle volume is 10%, and the width to length ratio of the anode active material is $AR_{50}$ when the cumulative distribution of the particle volume is 50%.

As stated herein, the "width to length ratio" of the anode active material means the ratio of the wide diameter to the long diameter of the particles of the anode active material. The width to length ratio of the anode active material can be obtained by dynamic particle image analysis (e.g., using the SYMPATEC QICPIC dynamic particle image analyzer). The "wide diameter" of the particles of the anode active material refers to the minimum value between parallel lines tangent to the projected image of the particles. The "long diameter" of the particles of the anode active material refers to the maximum value between parallel lines tangent to the projected image of the particles. The particles of the anode active material have an elongated shape when the width to length ratio of the anode active material is relatively small.

As stated herein, "$AR_n$" means the width to length ratio of the particles of the anode active material when the cumulative distribution of the particle volume of the anode active material is n%. "$AR_{10}$" refers to the width to length ratio of the particles of the anode active material when the cumulative distribution of the particle volume of the anode active material is 10%. "$AR_{50}$" refers to the width to length ratio of the particles of the anode active material when the cumulative distribution of the particle volume of the anode active material is 50%. "$AR_{90}$" refers to the width to length ratio of the particles of the anode active material when the cumulative distribution of the particle volume of the anode active material is 90%.

In some embodiments, the anode active material comprises primary particles.

In some embodiments, the $AR_{10}$ may be 0.11, 0.12, 0.13, 0.14, 0.15, 0.16, 0.17, 0.18, 0.19, and any value among them. In some embodiments, $AR_{50}$ may be 0.22, 0.24, 0.26, 0.28, 0.30, 0.31, 0.33, 0.35, 0.39, and any value among them.

In some embodiments, the anode active material meets $0.4 \leq AR_{90} \leq 0.8$, and $AR_{90}$ represents the width to length ratio of the anode active material when the cumulative distribution of the particle volume is 90%. In some embodiments, $AR_{90}$ may be 0.45, 0.48, 0.53, 0.55, 0.57, 0.60, 0.63, 0.65, 0.70, 0.75, and any value among them. The high percentage of elongated particles in the anode active material in this range can accelerate the rapid de-embedding of lithium ions and improve the rate performance of the secondary battery. In some embodiments, the anode active material meets $1.3 < AR_{90}/AR_{50} < 3.5$. In some embodiments of the present application, the $AR_{90}/AR_{50}$ may be 1.4, 1.5, 1.7, 1.9, 2.0, 2.3, 2.5, 2.7, 2.9, 3.0, 3.2, 3.5, and any value among them. Controlling the width to length ratio distribution of the particles of the anode active material within this range can further raise the de-embedding speed of lithium ions, increase the rate performance of the secondary battery, and improve the deformation of the anode.

When the width to length ratio of the anode active material meets $0.1 \leq AR_{10} < 0.2$, $0.2 \leq AR_{50} < 0.4$, and $0.4 \leq AR_{90} \leq 0.8$, most of the particles of the prepared anode active material are elongated, and the specific capacity of the anode active material is the highest in this range. When the long diameter of the particles of the anode active material is 45° to 90° to the direction parallel to the current collector, it can reduce the transmission path during the lithium-ion transport and accelerate the rapid de-embedding of lithium ions, and it can make the stress on the particles of the anode active material during the embedding and de-embedding of lithium ions release uniformly in all directions to improve deformation.

In some embodiments, the anode active material meets $1.5 \leq Dv99/Dv50 \leq 4.5$. In some embodiments, Dv99/Dv50 may 1.8, 2.0, 2.2, 2.5, 2.7, 3.0, 3.3, 3.5, 3.8, 4.0, 4.3 and any value among them. In the present application, when the long diameter of the particles of the anode active material is perpendicular to the current collector, and the particle size is too large, the prepared anode is prone to produce bumps on the surface of the anode active material layer after being treated with a certain pressure. The bumps will affect the appearance of the anode and are easy to precipitate lithium, further affecting the cycling performance of the battery. Besides, large particles are not conducive to the embedding and de-embedding of lithium ions. Therefore, the particle size of the anode active material needs to be controlled within the range.

In some embodiments, the specific capacity of the anode active material is greater than or equal to 355mAh/g. In some embodiments, the specific capacity of the anode active material is 355mAh/g to 370mAh/g. In some embodiments, the specific capacity of the anode active material may be 358mAh/g, 360mAh/g, 362mAh/g, 365mAh/g, 368mAh/g, 370mAh/g, and any value among them.

In some embodiments, the ratio of the 004 crystal plane diffraction peak area C004 to the 110 crystal plane diffraction peak area C110 of the anode active material measured by X-ray diffraction method meets $10 \leq C004/C110 \leq 40$. For example, the ratio may be 12, 15, 17, 20, 23, 25, 28, 30, 33, 35, 37, 39, and any value among them. The ratio within the range is more conducive to the embedding and de-embedding of lithium ions.

In some embodiments, the compacted density of the anode active material is greater than or equal to $1.90g/cm^3$.

In some embodiments, the compacted density of the anode active material is the compacted density of the powder. In some embodiments, the compacted density of the anode active material is greater than or equal to 1.90g/cm$^3$ at a test pressure of 5t. The compacted density of the anode active material is correlated to the pressure that the anode material can withstand after being prepared into an anode, and the material with high compacted density is beneficial for preparing batteries with high volume energy density.

In some embodiments, the anode active material comprises artificial graphite. In some embodiments, the artificial graphite comprises at least one of needle coke artificial graphite, petroleum coke artificial graphite, and bitumen artificial graphite. In some embodiments, at least a portion of the surface of the anode active material contains an amorphous carbon layer. In some embodiments, the raw material of the artificial graphite includes at least one of needle coke, petroleum coke or bitumen. The raw material is crushed to a certain size and then graphitized at a temperature greater than or equal to 2800°C to obtain the artificial graphite.

II. Anode

The present application provides an anode, the anode comprises an anode current collector and an anode active material layer, and the anode active material layer comprises the anode active material as claimed in the first aspect.

In some embodiments, the anode comprises the particles of the anode active material; the long diameter direction of the particles of the anode active material has an angle $\theta$ of $45° \leq \theta \leq 90°$ with the anode current collector. In some embodiments, the anode active material comprises the particles; the long diameter direction of the particles of the anode active material has an angle $\theta$ of $50° \leq \theta \leq 90°$ with the anode current collector. In some embodiments, the angle $\theta$ is 45°, 50°, 55°, 60°, 65°, 70°, 80°, 85°, 90° and any value among them. The angle $\theta$ in the present application is an acute or right angle in the angle between the long diameter direction of the particles and the anode current collector, as shown in FIG. 1. The angle distribution can be measured with a polarizing microscope.

In some embodiments, the anode comprises the particles of the anode active material; the long diameter direction of the particles of the anode active material has an angle $\theta$ of $50° \leq \theta \leq 85°$ with the anode current collector. In some embodiments, the anode comprises the particles of the anode active material; the long diameter direction of the particles of the anode active material has an angle $\theta$ of $55° \leq \theta \leq 85°$ with the anode current collector.

In some embodiments, in the anode the present application, the long diameter direction of the particles of the anode active material has an angle $\theta$ of $45° \leq \theta \leq 90°$ with the anode current collector. In some embodiments, the long diameter direction of at least 50% of the particles of the anode active material in the anode has an angle $\theta$ of $45° \leq \theta \leq 90°$ with the anode current collector, for example, the long diameter direction of at least 60%, at least 70%, at least 80% or at least 90% of the particles of the anode active material has an angle $\theta$ of $45° \leq \theta \leq 90°$ with the anode current collector.

In some embodiments, in the anode of the present application, the long diameter direction of the particles of the anode active material has an angle $\theta$ of $50° \leq \theta \leq 85°$ with the anode current collector. In some embodiments, in the anode, the long diameter direction of the anode active material has an angle $\theta$ of $55° \leq \theta \leq 85°$ with the anode current collector. In some embodiments, in the anode the present application, the long diameter direction of the anode active material has an angle $\theta$ of $65° \leq \theta \leq 90°$ with the anode current collector. In some embodiments, the long diameter direction of the particles of the anode active material has an angle $\theta$ of 90° with the current collector, i.e., the long diameter direction of the anode active material is perpendicular to the current collector.

The particles of the anode active material are stacked on the surface of the current collector layer by layer in different orientations according to a certain porosity among the particles to form the anode active material layer. When the anode is prepared by the conventional process, the long side of the elongated particles tends to be parallel to the current collector and the short side of the elongated particles tends to be perpendicular to the direction of the current collector, and the distribution makes it difficult for lithium ions embedding through the gap between the particles. In some embodiments, in the anode of the present application, the long diameter of the particles of the anode active material, as shown in FIG. 1, is distributed on the current collector with an angle greater than or equal to 45°. In this way, the path of embedding lithium ions in the graphite layer is greatly shortened, which can effectively speed up the embedding of lithium ions. At the same time, in the embedding process, because the angle between the long diameter and the current collector is greater than or equal to 45°, the lithium ions are embedded in the anode active material layer from the short diameter direction, as shown in FIG. 2, so the expansion perpendicular to the anode direction is greatly reduced.

In some embodiments, the ratio of the 004 crystal plane diffraction peak area C004 to the 110 crystal plane diffraction peak area C110 of the anode measured by X-ray diffraction method meets C004/C110≤15. For example, the ratio may be 5, 7, 8, 9, 10, 11, 12, 13, 14, 15, and any value among them. The ratio within the range is more conducive to the embedding and de-embedding of lithium ions. In some embodiments, the C004/C110 of the anode is lower than the C004/C110 of the anode active material. The present application uses a special method to make long diameter particles be 45° to 90° with the direction parallel to the current collector, resulting in a smaller ratio of the anode and better de-embedding of lithium ions.

In some embodiments, the anode in electrolyte has a good infiltration and meets the infiltration time less than or equal to 2 min.

In some embodiments, the anode comprises an anode current collector and an anode active material layer, wherein the anode active material layer is distributed on at least one surface of the anode current collector, and the anode active material layer comprises any of the anode active materials.

In some embodiments, the anode active material layer also comprises a bonding agent, and the bonding agent comprises one or more of polyvinylidene fluoride, copolymer of vinylidene fluoride-hexafluoropropylene, polyamide, polyacrylonitrile, polyacrylate, polyacrylic acid, polyacrylate salt, sodium carboxymethyl cellulose, polyvinylpyrrolidone, polyvinylether, polymethyl methacrylate, polytetrafluoroethylene and polyhexafluoropropylene, styrene-butadiene rubber, acrylate and epoxy resin.

In some embodiments, the anode also comprises a conductive coating located between the anode active material layer and the current collector. The conductive coating comprises one or more of carbon fiber, Ketjen black, acetylene black, carbon nano tube, graphene and other conductive agents. In some embodiments, the anode current collector may comprise at least one of copper foil, aluminum foil, nickel foil or carbon-based current collector.

In some embodiments, the preparation method of the anode of the present application comprises that a slurry comprising the anode active material is coated on the current collector under a magnetic field. In some embodiments, the method comprises that a slurry containing the anode active material is coated on the current collector under a magnetic field, so that the long diameter direction of the anode active material has an angle $\theta$ of $45°\leq\theta\leq85°$ with the anode current collector. In some embodiments, the magnetic induction intensity of the magnetic field is 3000Gs to 7200Gs.

In some embodiments, the diamagnetism of the graphite is used to apply a certain amount of magnetic induction intensity when the anode slurry is coated on the current collector. For example, when the intensity is 3000Gs to 7200Gs, the particles of the anode active material treated by the magnetic induction intensity may be distributed on the current collector with the short diameter parallel to the current collector and the long diameter perpendicular to the current collector. This can effectively distribute the lithium ion embedding end surface of the anode active material, e.g., the graphite, in a direction parallel to the current collector, speeding up the embedding of lithium ions.

III. Secondary battery

The secondary battery of the present application comprises a lithium metal secondary battery, a lithium-ion secondary battery, a lithium polymer secondary battery, or a polymer lithium-ion secondary battery. In some embodiments, the secondary battery of the present application comprises a cathode, the anode as claimed in the second aspect of the present application, a separator, and an electrolyte.

In some embodiments, the secondary battery is disassembled at 50% SOC to obtain an anode. The thickness of the anode is measured with a digital micrometer (0.0001mm). For the sake of a typical measurement, the testing is performed at 14 points to obtain the mean value. Compared with an uncharged anode, the increasing rate in the thickness of the anode is less than or equal to 15%.

In some embodiments, the thickness of the secondary battery measured after 50 cycles increases by less than or equal to 5% when compared with that of the battery measured at 50% SOC. The battery thickness is measured using a micrometer.

In some embodiments, the capacity retention of the secondary battery charging at 5C and 0.5C is greater than or equal to 90% at 25°C.

1. Anode

The anode in the secondary battery of the present application comprises the anode as claimed in the second aspect of the present application.

2. Cathode

The material, composition and manufacturing method of the material applicable to the embodiments of the present application comprise all existing technologies disclosed.

In some embodiments of the present application, the cathode comprises a cathode current collector, and a cathode active material layer on the cathode current collector. In some embodiments of the present application, the cathode active material comprises but is not limited to lithium cobaltate ($LiCoO_2$), nickel-cobalt-manganese (NCM) ternary lithium, lithium iron phosphate ($LiFePO_4$), or lithium manganate ($LiMn_2O_4$).

In some embodiments of the present application, the cathode active material layer also comprises a bonding agent and optionally a conductive material. The bonding agent is to strengthen the bonds among the particles of the cathode active material, as well as the bonds between the cathode active material and the cathode current collector. In some embodiments, the bonding agent comprises polyvinyl alcohol, hydroxypropyl cellulose, diacetyl cellulose, polyvinyl chloride, carboxylated polyvinyl chloride, polyvinyl fluoride, polymers containing ethylene oxygen, polyvinylpyrrolidone, polyurethane, polytetrafluoroethylene, polyvinylidene 1,1-difluoride, polyethylene, polypropylene, styrene-butadiene rubber, acrylated styrene-butadiene rubber, epoxy resin or nylon, etc.

In some embodiments of the present application, the conductive material comprises but is not limited to carbon-based material, metal-based material, conductive polymer, and their mixtures. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments of the present application, the cathode current collector comprises but is not limited to aluminum foil or nickel foil.

3. Electrolyte

The electrolyte applicable in the embodiments of the present application can be any electrolyte known by the available technologies.

In some embodiments, the electrolyte comprises an organic solvent, a lithium salt, and an additive. The organic solvent of the electrolyte according to the present application can be any organic solvent known by the available technologies that can be used as the solvent of the electrolyte. There is no limitation to the electrolyte used in the electrolyte according to the present application. It can be any electrolyte known by the available technologies. The additive of the electrolyte according to the present application can be any additive known by the available technologies that can be used as the additive to the electrolyte.

In some embodiments, the organic solvent comprises but is not limited to ethylene carbonate (EC), propylene carbonate (PC), diethyl carbonate (DEC), ethyl methyl carbonate (EMC), dimethyl carbonate (DMC), propyl propionate or ethyl propionate.

In some embodiments, the lithium salt comprises but is not limited to lithium hexafluorophosphate (LiPF6), lithium tetrafluoroborate (LiBF4), lithium difluorophosphate (LiO2F2), bistrifluoromethanesulfonimide lithium salt LiN(CF3SO2)2 (LiTFSI), imidodisulfuryl fluoride lithium salt Li(N(SO2F)2)(LiFSI), lithium bis(oxalato) borate (C2O4)2 (LiBOB) or lithium difluoro(oxalato)borate LiBF2(C2 O4) (LiDFOB).

In some embodiments, the concentration of the lithium salt in the electrolyte is 0.5mol/L to 3mol/L, 0.5mol/L to 2mol/L, or 0.8mol/L to 1.5mol/L.

In some embodiments, the additive comprises but is not limited to vinylene carbonate (VC), vinyl ethylene carbonate (VEC), fluoroethylene carbonate (FEC), difluoroethylene carbonate (DFEC), 1,3-propane sultone (PS), 1,3,2-dioxathiolane-2,2-dioxide (DTD), 1,3-dioxane, maleic anhydride, hexanedinitrile, succinonitrile, pentane-1,3,5-tricarbonitrile, hexane-1,3,6-tricarbonitrile. 4. Separator

There is no special limitation to the material and shape of the separator used in the secondary battery of the present application. It can be any of the available technologies disclosed. In some embodiments, the separator comprises a polymer or an inorganic material formed from a stable material applicable to the electrolyte of the present application.

For example, the separator may include a substrate layer and a surface treatment layer. The substrate layer is a porous non-woven fabric, a film, or a composite film. The substrate layer is made from at least one of polyethylene, polypropylene, polyethylene terephthalate and polyimide. Concretely, the film can be polypropylene porous film, polyethylene porous film, polypropylene non-woven fabric, polyethylene non-woven fabric, or polypropylene-polyethylene-polypropylene porous composite film.

At least one surface of the base material layer is coated with a surface treatment layer. The surface treatment layer can be a polymer layer or an inorganic player, or a layer formed by the mixed polymer and the inorganic.

The inorganic layer comprises an inorganic particle and a bonding agent. The inorganic particle is selected from at least one of alumina, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The bonding agent is selected from at least one of polyvinylidene fluoride, copolymer of vinylidene fluoride-hexafluoropropylene, polyamide, polyacrylonitrile, polyacrylate, polyacrylic acid, polyacrylate salt, polyvinyl pyrrolidone, polyvinyl alkoxy, polymethyl methacrylate, polytetrafluoroethylene, and polyhexafluoropropylene.

The polymer contained in the polymer layer is selected from at least one of polyamide, polyacrylonitrile, acrylate polymer, polyacrylic acid, polyacrylate, polyvinyl pyrrolidone, polyethylene alkoxy, polyvinylidene fluoride, and poly (vinylidene fluoride - hexafluoropropylene).

IV. Electrical device

The present application further provides an electronic device comprising the secondary battery as claimed in the third aspect of the present application.

There is no special limitation to the electrical equipment or electrical device of the present application. In some embodiments, the electrical equipment of the present application comprises but is not limited to a laptop, a pen-input computer, a mobile computer, an e-book player, a cellular phone, a portable fax machine, a portable duplicator, a portable printer, a stereophone headset, a video recorder, a LCD TV, a portable cleaner, a portable CD player, a mini CD player, a transceiver, an electronic notebook, a calculator, a memory card, a portable recorder, a radio, a backup power supply, a motor, a car, a motorcycle, a power bicycle, a bicycle, a lighting apparatus, a toy, a game machine, a clock, an electric tool, a flashlight, a camera, a large battery for domestic use and a lithium-ion capacitor, etc.

## EMBODIMENTS

The following describes the performance evaluation carried out based on the embodiments and the comparative examples of the lithium-ion battery of the present application.

I. Preparation of the lithium-ion battery

1. Preparation of the anode

An anode active materials of graphite, styrene butadiene rubber (SBR) and carboxyl methyl cellulose (CMC) are fully stirred and mixed in the deionized water solvent at a weight ratio of 95:2:3, to form a uniform anode slurry. The anode slurry is coated on a Cu foil anode current collector pre-coated with a priming coat (e.g., carbon black), the thickness of the priming coat is $1.5\mu m$ to, the coating weight of the anode slurry is $0.100mg/mm^2$; the double-sided coating thickness of the anode slurry is $130\mu m$. In the coating process, a certain magnetic flux is applied to change the distribution of the particles on the current collector, and the magnetic flux ranges from 3000Gs to 7200Gs. After drying, cold pressing, cutting and pole lug welding are performed to obtain the anode.

The preparation method of the graphite is as follows:

(1) The particles of the graphite precursor (screening strong needle-like raw material) are ground to a certain size with the efficient grinding equipment, then the ground particles are delivered to the grading equipment. The size of particles is controlled within a certain range based on the centrifugal separation effect of the equipment, and the ground particles are delivered to the graphitized furnace for graphitization. The graphitization equipment is continuous graphitization furnace, and materials having entered the graphitized furnace are ground to the required size ($6\mu m$ <Dv50< $10\mu m$);

(2) Graphitization is performed at a temperature between 2800°C and 3200°C, after which the required graphite is collected. The graphite parameters are adjusted by controlling the particle diameter of the precursor and the temperature of graphitization.

The width to length ratio of the anode active material graphite is controlled as follows: During the preparation of the anode active material graphite, the well-prepared graphite is delivered to the shaping zone for polishing via the feeding system to make the particle surface angular, to control the width to length ratio and the degree of sphericity of the particles. Then, the polished particles are graded via the self-shunt grading zone to obtain the particles with the required distribution.

2. Preparation of the cathode

The lithium cobaltate (LiCoO$_2$), acetylene black and polyvinylidene fluoride (PVDF) are fully stirred and mixed in moderate N-Methylpyrrolidone (NMP) solvent at a weight ratio of 96:2:2, to form the uniform cathode slurry. The cathode slurry is coated on the cathode current collector aluminum foil, and after drying, cold pressing, cutting, and slitting, the cathode is obtained.

3. Preparation of the electrolyte

In the argon atmosphere glove box with a moisture content less than 10 ppm, the ethylene carbonate (EC), diethyl carbonate (EDC) and propylene carbonate (PC for short) are mixed evenly at a mass ratio of 3:4:3, and then the fully dried lithium salt LiPF$_6$ is dissolved in the non-aqueous solvent. Finally, fluoroethylene carbonate, 1,3-propane sultone and butanedinitrile are added to prepare the electrolyte. Based on the total weight of the electrolyte, the content of LiPF$_6$ is 12.5wt%, the content of fluoroethylene carbonate is 3 wt%, the content of 1,3-propane sultone is 2 wt% and the content of butanedinitrile is 2wt%. 4. Preparation of the separator

The 7$\mu$m thick polyethylene (PE) porous polymer film is taken as the separator.

5. Preparation of the lithium-ion battery

The cathode, separator and anode are stacked in order, and the separator is placed between the cathode and the anode for isolation, then the bare cell is obtained via coiling; after the pole lug is welded, the bare cell is placed in the aluminum foil plastic film of the outer package, and the well-prepared electrolyte is injected in the dried bare cell, after procedures such as vacuum encapsulation, standing, formation, shaping and capacity test, the soft-pack lithium-ion battery is obtained.

II. Test methods

1. Test method for the width to length ratio distribution of the anode active material

The SYMPATEC QICPIC dynamic particle image analyzer is used to test the width to length ratio distribution of the anode active material, obtaining the width to length ratio in different cumulative distribution of the particle volume.

2. Test method for the compacted density of the anode active material

The test refers to GB/T 24533-2009 *Graphite materials of the anode for lithium ion battery.* The test method is as follows: 1.0000$\pm$0.0500g sample is weighed and placed in the test mould (CARVER#3619 (13mm)), and then placed in the SUNS UTM7305 test equipment. The test tonnage ranges from 0.3t to 5.0t, and the compacted densities in the present application are all those measured at 5t. The calculation formula of the compacted density is as follows: Compacted density = Mass of the anode active material/Stressed area of the anode active material/Thickness of the sample.

3. Test method for an angle between the long diameter of the anode active material particles and the plane of the anode current collector

Preparation process of the anode cross-section polishing (CP) sample: The anode obtained by disassembling the lithium-ion battery is cut into the size of 0.5cm$\times$1cm, and the conductive adhesive is used to paste the cut anode onto the 1cm$\times$1.5cm silicon wafer carrier. Then the argon ion polishing (parameter: acceleration voltage of 8KV, 4h for each sample) is performed to one end of the anode to obtain the anode CP sample. The argon ion polishing is to use the high-voltage electric field to ionize the argon, and the argon ions generated bombard the surface of the anode under the action of the acceleration voltage, to denude the anode layer by layer to achieve the polishing effect.

After the anode CP sample preparation is completed, the polarizing microscope is used to analyze the sample.

The operation of the polarizing microscope is as follows:

Image acquisition process: The Axio imager upright microscope (manufactured by Carl Zeiss AG, Imagine A2) is used to acquire images, the AxioCam MRc5 digital camera is connected to the polarizing microscope via connectors to shoot the images of the polarizing microscope at a shutter speed of 1.6s, and the images captured by the digital camera are automatically transferred to the computer.

Image analysis process: The image of 1200$\times$1600 pixels is taken as the analysis object (equivalent to the field of view of 480$\mu$m$\times$540$\mu$m). The self-contained software Multiphase of AxioVision is used for analysis. After the acquired images have been imported to the software, a point with an orientation on the image was clicked, then all the areas that had a gray value and color value identical to those of the tested object were also selected. Points with other orientations were also selected using the same method. The automatic calculation software of AxioVision (Axio Vision SE64 Rel.4.9) is used to measure the data of different angles between the long diameter of the anode active material particles and the plane of the anode current collector, and the long diameter of the anode active material particles are obtained according to the measured results.

4. Test method for the particle sizes (Dv50 and Dv99) of the anode active material

The test method of the particle size refers to GB/T 19077-2016. The specific process is as follows: 1g sample of the anode active material and 20mL deionized water are weighed and mixed with traces of dispersant, after being placed into the ultrasonic equipment for 5min of ultrasonication, the solution is poured into the sampling system Hydro 2000SM for testing. The test equipment used is Mastersizer 3000 manufactured by Malvern. During the testing, when the laser beam passes through the dispersed particle sample, the particle size measurement is completed by measuring the intensity of the scattered light. Then, the data are used to analyze and calculate the particle size distribution of the particles forming the scattering spectrum. The refractive index of the particles for the test is 1.8. A sample of the anode active material is tested for three times, and the mean value of the three tests are finally taken as the particle size.

5. Test method for C004/C110 of the anode

The (004) plane diffracted ray pattern and the (110) plane diffracted ray pattern in the X-ray diffraction spectrogram of the anode is tested according to the machinery industry standard of the People's Republic of China JB/T 4220-2011 *Determination method of artificial graphite lattice parameter.* The test conditions are as follows: The X-ray adopts CuK$\alpha$ radiation, and the CuK$\alpha$ radiation is removed by the filter or the monochromator. The working voltage of the X-ray tube ranges from 30kV to 35kV, and the working current ranges from 15mA to 20mA. The scanning speed of the counter is 1/4 (°)/min. The test sample is the anode active material layer of the anode obtained by disassembling the lithium-ion battery. When recording the 004 diffracted ray pattern, the scanning range of the diffraction angle 2θ is between 53° and 57°. When recording the 110 diffracted ray pattern, the scanning range of the diffraction angle 2θ is between 75° and 79°. The peak area obtained based on the (004) plane diffracted ray pattern is recorded as C004, and the peak area obtained based on the (110) plane diffracted ray pattern is recorded as C110. The specific value of C004/C110 of the anode is calculated. The difference between the test methods for C004/C110 of the anode active material and that of the anode is that the anode active material shall be firstly placed in the glass sheet with groove and compacted.

6. Test method for the porosity of the anode active material layer

The anode active material layer sample is prepared into a complete wafer. Thirty samples are tested for each embodiment or comparative example, and the volume of each sample is approximately 0.35 cm$^3$. The porosity of the anode active material layer is tested according to GB/T24586-2009 *Iron ores - Determination of apparent density*, *true density and porosity.*

7. Test method for the infiltration time of the anode

Take the 50 (L)×50 (W) anode sample prepared in the embodiment or comparative example. Under dry conditions, drip 5 mL electrolyte solution prepared from the "preparation of electrolyte solution" onto the sample surface, and start timing. Stop timing when the electrolyte solution drips on the sample surface disappear. The counted time is recorded as the infiltration time of the anode. Thirty samples are tested for each embodiment or comparative example to calculate the mean value.
Alternatively, disassembling the lithium-ion battery after it is discharged to 3V at 0.1C, and take out the anode, then dry it at 70°C. Cut the anode obtained into a 50mm (Length)×50mm (Width) sample. Under dry conditions, drip SmL electrolyte used in the embodiment or the comparative example onto the sample surface, and start timing. Stop timing when the electrolyte drips on the sample surface disappear. The counted time is recorded as the infiltration time of the anode. Thirty samples are tested for each embodiment or comparative example to calculate the mean value.

8. Test method for the lithium-ion battery liquid phase transfer impedance (Rion)

The lithium-ion battery is connected to the Bio-Logic VMP3B electrochemical workstation manufactured by Bio-Logic, France for testing. The frequency ranges from 30 mHz to 50 kHz, and the amplitude is 5 mV. The impedance complex plane is employed to analyze the data after the acquisition, to obtain the lithium-ion battery liquid phase transfer impedance (Rion).

9. Test method for the 5C discharge capacity retention of the lithium-ion battery

After standing for 5min at 25°C, the lithium-ion battery is charged to 4.45V at a constant current of 0.7C, then to 0.05C at a constant voltage of 4.45V, and stands for 5min. Then it is discharged to 3.0V at a constant current of 0.5C, and stands for 5min. The charging and discharging process is repeated, the lithium-ion battery is discharged at 0.1C and the 0.1C discharge capacity is recorded, then it is discharged at 5C and the 5C discharge capacity is recorded. The 5C discharge capacity retention of the lithium-ion battery is calculated with the following formula:

5C discharge capacity retention = 5C discharge capacity/0.1C discharge capacity×100%.

10. Test method for the direct current resistance (DCR) of the lithium-ion battery

At 25°C, the lithium-ion battery is charged to 4.45V at a constant current of 1.5C, then to 0.05C at a constant voltage of 4.45V, and stands for 30min. It is discharged for 10s at 0.1C, and the voltage value is recorded as U1; it is discharged for 360s at 1C, and the voltage value is recorded as U2. The charging and discharging steps are repeated for five times. "1C" is the current value when the lithium-ion battery is completely discharged.

The direct current resistance R of the lithium-ion battery at 25°C is calculated with the following formula:

$$R=(U2-U1)/(1C-0.1C).$$

The direct current resistance of the lithium-ion battery at 0°C is tested with the basically same method. The only difference is the operating temperature of 0°C.

Unless otherwise specified, the DCR in the present application refers to the direct current resistance of the lithium-ion battery at the 10% SOC.

11. Determination method for the lithium precipitation (Lithium precipitation test at 0°C-0.8C) of the lithium-ion battery

The lithium-ion battery to be tested is taken and stands for 5min at 0°C. It is charged to 4.45V at a constant current of 0.8C, then to 0.05C at a constant voltage of 4.45V; after standing for 5min, it is discharged to 3.0V at a constant current of 0.5C, and stands for 5min. After repeating the charging and discharging process for 10 times, the battery is fully charged and then disassembled in the drying room, and the state of the anode is photographed.

The degree of lithium precipitation of the lithium-ion battery is determined according to the following standards: When the disassembled anode appears to be golden yellow overall, only a small portion can be observed in gray, and the area of the gray portion is less than 2%, it is determined as no lithium precipitation.

When most of the disassembled anode appears to be golden yellow, a part of it can be observed in gray, and the area of the gray part is between 2% and 20%, it is determined as slight lithium precipitation.

When the disassembled anode appears to be gray overall, a part of it can be observed in golden yellow, and the area of the gray part is between 20% and 60%, it is determined as lithium precipitation.

When the disassembled anode appears to be gray overall and the area of the gray part is greater than 60%, it is determined as serious lithium precipitation. 12. Test method for the charge transfer resistance (Rct) of the lithium-ion battery In the preparation of the lithium-ion battery, the copper wire is additionally connected as the reference pole, and lithium plating at the anode is performed for 6h at 20μA to obtain the three-pole lithium-ion battery.

The three-pole lithium battery is connected to the Bio-Logic VMP3B electrochemical workstation manufactured by Bio-Logic, France for testing. The frequency ranges from 30 mHz to 50 kHz, and the amplitude is 5 mV. The impedance complex plane is adopted to analyze the data after acquisition, to obtain the charge transfer resistance (Rct) of the lithium-ion battery.

13. Test method for the thickness growth rate along the Z-axis direction of the anode

The measured thickness of the anode which has undergone the cold pressing is recorded as T1. The processed anode is prepared into the lithium-ion battery according to the preparation steps of the lithium-ion battery, and the lithium-ion battery stands for 5min at 25°C and is charged to 3.95V at a constant current of 0.7C (i.e., 50%SOC). The lithium-ion battery is disassembled under dry conditions to obtain the disassembled anode. The thicknesses of the anode at least 14 points are recorded to obtain the mean value, which is recorded as T2. The expansion rate of the anode along the Z direction is calculated with the following formula:

$$\text{Expansion rate along the Z direction} = (T2-T1)/T1 \times 100\%.$$

14. Expansion rate along the Z-axis direction of the lithium-ion battery

After standing for 5min at 45°C, the lithium-ion battery is charged to 4.45V at a constant current of 0.7C, then to 0.05C at a constant voltage of 4.45V, and stands for 5min. The thickness of the lithium-ion battery is tested at three positions by the MMC test method to calculate the mean value, which is recorded as $MMC_0$. Then, the lithium-ion battery is discharged to 3.0V at a constant current of 0.5C, and stands for 5min. The charging and discharging process is repeated for 50 times, recorded as $MMC5_0$ (50 represents the number of cycles of the lithium-ion battery). The cyclic expansion rate of the lithium-ion battery at 45°C is calculated with the following formula:

$$\text{Cyclic expansion rate (45°C)} = (MMC_x - MMC_0)/MMC_0 \times 100\%.$$

The MMC test method is as follows: The micrometer (manufactured by Mitutoyo, Japan, model: MDC-25SX) is used to measure the thickness of the lithium-ion battery near the pole lug of the anode. Three different positions of each sample are measured to calculate the mean value, which is recorded as the MMC thickness.

III. Test results

Table 1 shows how the width to length ratio distribution of the graphite particles and the magnetic flux applied in the coating process affect the specific capacity, C004/C110 of the graphite particle powder, C004/C110 of the anode, the angle between the long diameter direction of the particles and the current collector, the thickness growth rate of the anode along the Z-axis, as well as the direct current resistance (DCR) of the lithium-ion battery 1. The anode active materials used in Embodiments 1-26 are made of the same raw material, i.e., needle coke, which is obtained by sintering at 3000°C. The particle size Dv50 of the anode active material is $8\mu m$ and the particle size Dv99 is $27\mu m$.

Table 1

| | Anode active material | | | | | Anode | | | | Lithium-ion battery |
| | Width to length ratio distribution | | | Specific capacity mAh/g | C004/C110 of graphite particle powder | Magnetic flux Gs | θ ° | C004/C110 | Thickness growth rate along the Z-axis | DCR mΩ |
| | AR$_{10}$ | AR$_{50}$ | AR$_{90}$ | | | | | | | |
|---|---|---|---|---|---|---|---|---|---|---|
| Embodiment 1 | 0.10 | 0.20 | 0.40 | 368.0 | 40.0 | 7200 | 45.0 | 15.0 | 12.9% | 225.7 |
| Embodiment 2 | 0.15 | 0.20 | 0.40 | 366.0 | 38.0 | 7100 | 45.0 | 14.7 | 12.2% | 223.6 |
| Embodiment 3 | 0.19 | 0.20 | 0.40 | 365.0 | 36.0 | 7000 | 45.0 | 14.3 | 12.0% | 222.4 |
| Embodiment 4 | 0.10 | 0.30 | 0.40 | 363.5 | 34.0 | 6890 | 45.0 | 13.9 | 11.9% | 220.5 |
| Embodiment 5 | 0.15 | 0.30 | 0.40 | 362.6 | 32.0 | 6770 | 45.0 | 13.7 | 11.7% | 218.3 |
| Embodiment 6 | 0.19 | 0.30 | 0.40 | 361.5 | 30.0 | 6640 | 45.0 | 13.4 | 11.5% | 217.1 |
| Embodiment 7 | 0.10 | 0.39 | 0.50 | 360.4 | 29.0 | 6500 | 45.0 | 12.6 | 11.1% | 215.8 |
| Embodiment 8 | 0.15 | 0.39 | 0.50 | 359.6 | 28.0 | 6350 | 45.0 | 12.2 | 10.6% | 210.8 |
| Embodiment 9 | 0.19 | 0.39 | 0.50 | 359.2 | 27.0 | 6190 | 45.0 | 11.4 | 9.9% | 204.0 |
| Embodiment 10 | 0.10 | 0.30 | 0.60 | 360.5 | 28.5 | 6020 | 45.0 | 12.9 | 11.4% | 216.1 |
| Embodiment 11 | 0.15 | 0.30 | 0.60 | 360.2 | 27.5 | 5840 | 45.0 | 12.4 | 10.8% | 213.2 |
| Embodiment 12 | 0.19 | 0.30 | 0.60 | 359.5 | 26.6 | 5650 | 45.0 | 11.8 | 10.4% | 206.5 |

| | Anode active material | | | | | Anode | | | | Lithium-ion battery |
|---|---|---|---|---|---|---|---|---|---|---|
| | Width to length ratio distribution | | | Specific capacity mAh/g | C004/C110 of graphite particle powder | Magnetic flux Gs | $\theta$ ° | C004/C110 | Thickness growth rate along the Z-axis | DCR m$\Omega$ |
| | AR$_{10}$ | AR$_{50}$ | AR$_{90}$ | | | | | | | |
| Embodiment 13 | 0.10 | 0.30 | 0.70 | 359.1 | 25.8 | 5450 | 45.0 | 11.5 | 10.2% | 205.2 |
| Embodiment 14 | 0.15 | 0.30 | 0.70 | 358.7 | 24.7 | 5240 | 45.0 | 10.8 | 9.5% | 199.1 |
| Embodiment 15 | 0.19 | 0.30 | 0.70 | 358.2 | 24.1 | 5020 | 45.0 | 10.3 | 9.0% | 197.1 |
| Embodiment 16 | 0.10 | 0.39 | 0.70 | 357.7 | 23.0 | 4790 | 45.0 | 11.1 | 9.7% | 199.6 |
| Embodiment 17 | 0.15 | 0.39 | 0.70 | 357.1 | 22.5 | 4550 | 45.0 | 10.5 | 9.3% | 198.2 |
| Embodiment 18 | 0.19 | 0.39 | 0.70 | 356.8 | 21.6 | 4300 | 45.0 | 9.7 | 8.7% | 193.6 |
| Embodiment 19 | 0.10 | 0.30 | 0.80 | 358.3 | 23.8 | 4040 | 45.0 | 11.2 | 9.8% | 201.2 |
| Embodiment 20 | 0.15 | 0.30 | 0.80 | 357.5 | 22.7 | 3770 | 45.0 | 10.4 | 9.1% | 197.7 |
| Embodiment 21 | 0.19 | 0.30 | 0.80 | 357.0 | 21.3 | 3490 | 45.0 | 9.5 | 8.4% | 189.5 |
| Embodiment 22 | 0.10 | 0.39 | 0.80 | 356.7 | 18.9 | 3200 | 45.0 | 10.7 | 9.4% | 198.8 |
| Embodiment 23 | 0.15 | 0.39 | 0.80 | 356.1 | 16.4 | 3000 | 45.0 | 10.1 | 8.9% | 195.4 |
| Embodiment 24 | 0.19 | 0.39 | 0.80 | 355.7 | 14.3 | 3000 | 55.0 | 8.5 | 7.8% | 186.8 |

EP 4 310 955 A1

14

(continued)

| | Anode active material | | | | | Anode | | | | Lithium-ion battery |
|---|---|---|---|---|---|---|---|---|---|---|
| | Width to length ratio distribution | | | Specific capacity mAh/g | C004/C110 of graphite particle powder | Magnetic flux Gs | $\theta \circ$ | C004/C110 | Thickness growth rate along the Z-axis | DCR $m\Omega$ |
| | $AR_{10}$ | $AR_{50}$ | $AR_{90}$ | | | | | | | |
| Embodiment 25 | 0.15 | 0.30 | 0.90 | 355.0 | 11.5 | 3000 | 63.2 | 7.2 | 7.3% | 183.9 |
| Embodiment 26 | 0.15 | 0.39 | 0.30 | 367.5 | 39.5 | 7200 | 45.0 | 14.8 | 12.5% | 224.7 |
| Comparative example 1 | 0.05 | 0.30 | 0.50 | 358.0 | 50.0 | 8500 | 45.0 | 20.3 | 17.0% | 257.9 |
| Comparative example 2 | 0.40 | 0.70 | 0.90 | 350.0 | 6.0 | 2000 | 45.0 | 6.7 | 12.5% | 224.8 |
| Note: "$\theta$" is an angle between the long diameter direction of the particles of the anode active material and the current collector, and the measured value of the angle is the mean value of all particle angles. | | | | | | | | | | |

As show in Table 1, in Embodiments 1-26, as the width to length ratio of the particles of the anode active material increases, the specific capacity decreases and the C004/C110 of the graphite particle powder diminishes. Besides, the less the width to length ratio is, the bigger the magnetic flux required is. This is because the particles with a less width to length ratio are elongated, as shown in FIG. 1, and the elongated particles, when being coated, tend to stack on the anode in a direction parallel to the current collector. When the long side of the particles in the anode is parallel to the current collector, the lithium ions need to pass through a longer path before embedding in the graphite layer in the process of lithium de-embedding. When a certain magnetic flux is applied to the anode in the coating process, due to the presence of the magnetic field, the graphite particles are distributed by the diamagnetism of the graphite itself. The distribution of the graphite particles in the anode is controlled by regulating the magnitude of the applied magnetic field, and the C004/C110 of the anode is reduced compared to that of the graphite particle powder.

The data from Embodiments 1-6, Embodiments 7-9, Embodiments 10-12, Embodiments 13-18, and Embodiments 19-24 show that when the particles of the anode active material have a fixed $AR_{90}$, the value of the C004/C110 of the powder is affected with the increase of $AR_{10}$ or $AR_{50}$. This is because an increase in $AR_{10}$ or in $AR_{50}$ indicates that the shape of the particle tends to be sphere-like. Therefore, the C004/C110 of the- graphite particle powder measured by XRD changes. At the level of the anode, as a magnetic field is introduced in the coating process, the C004/C110 of the anode, though decreasing as well, shows much less rate of change with the increase of $AR_{10}$ and $AR_{50}$, and the change in the expansion affects the change in the C004/C110 of the anode.

As Embodiments 23 and 24 show, when the same magnitude of magnetic field is applied, a material with a bigger $AR_{10}$ has a bigger angle between the long diameter direction of the particles and the direction of the current collector. It indicates that there are more long diameters perpendicular to the direction of the current collector. This can effectively shorten the lithium-ion transfer path and reduce the expansion of the anode. Therefore, the thickness growth rate of the anode is significantly reduced.

Compared with Embodiment 24, the particles of the anode active material of Embodiment 25 have a larger $AR_{90}$. Under conditions of the same magnetic flux, the angle between the long diameter of the particles in Embodiment 25 and the current collector is smaller. This is because when there is a high percentage of sphere-like particles, the particle distribution has minor changes after a certain magnetic flux is applied. Similarly, as shown in Comparative Example 1, the $AR_{10}$ of the particles of the anode active material is only 0.05. It indicates that a portion of the particles are extremely elongated and therefore it is required to apply a very large magnetic field to keep its C004/C110 within a certain range.

It can be seen from Comparative Example 2 that the particles of the anode active material have bigger $AR_{10}$, $AR_{50}$ and $AR_{90}$ and that the particle shape tends to be round. That's why they require a very small magnetic flux. However, the material has a very small specific capacity. The present application relates to a strong needle graphite with a high specific capacity. When its width to length ratio is controlled within a certain range, a required magnetic flux is applied to adjust its distribution on the anode. This will help obtain a high energy density and control the expansion of the anode.

Table 2 shows how different width to length ratios and different particle sizes affect the C004/C110 of the graphite particle powder, the C004/C110 of the anode, as well as the battery performance when the coated anode is subject to a magnetic flux of 5000Gs under conditions of different particle diameters.

Table 2

| | Anode active material | | | | | | | Anode | | Lithium-ion battery | |
|---|---|---|---|---|---|---|---|---|---|---|---|
| | Width to length ratio distribution | | | Dv99/ Dv50 | Dv50 $\mu$m | Dv99 $\mu$m | C004/C110 of graphite particle powder | C004/C110 | $\theta$ ° | Expansion rate along the Z-axis | Lithium precipitation test at 0°C -0.8C |
| | $AR_{10}$ | $AR_{50}$ | $AR_{90}$ | | | | | | | | |
| Embodiment 27 | 0.19 | 0.25 | 0.40 | 2.50 | 6 | 15 | 34 | 15 | 72.0 | 4.1% | No lithium precipitation |
| Embodiment 28 | 0.15 | 0.30 | 0.40 | 2.50 | 8 | 20 | 25 | 13 | 73 | 4.0% | No lithium precipitation |
| Embodiment 29 | 0.19 | 0.30 | 0.40 | 2.50 | 8 | 20 | 22 | 12 | 76.0 | 3.9% | No lithium precipitation |
| Embodiment 30 | 0.10 | 0.39 | 0.50 | 2.50 | 6 | 15 | 20 | 10 | 81.0 | 3.5% | No lithium plating |
| Embodiment 31 | 0.15 | 0.39 | 0.50 | 2.13 | 8 | 17 | 24 | 11 | 78.0 | 3.8% | No lithium precipitation |
| Embodiment 32 | 0.19 | 0.39 | 0.50 | 2.00 | 10 | 20 | 24 | 15 | 62.0 | 4.5% | No lithium precipitation |
| Embodiment 33 | 0.10 | 0.30 | 0.60 | 3.83 | 6 | 23 | 28 | 9 | 77.0 | 3.7% | No lithium precipitation |
| Embodiment 34 | 0.15 | 0.30 | 0.60 | 3.13 | 8 | 25 | 30 | 12 | 69.0 | 4.1% | No lithium precipitation |
| Embodiment 35 | 0.19 | 0.35 | 0.60 | 2.50 | 6 | 15 | 16 | 8 | 85.0 | 3.3% | No lithium precipitation |
| Embodiment 36 | 0.10 | 0.30 | 0.70 | 2.70 | 10 | 27 | 36 | 15 | 54.0 | 4.8% | No lithium precipitation |
| Embodiment 37 | 0.19 | 0.39 | 0.70 | 2.50 | 10 | 25 | 40 | 15 | 51.0 | 4.9% | No lithium precipitation |
| Comparative Example 3 | 0.05 | 0.30 | 0.50 | 2.50 | 8 | 20 | 50 | 25 | 35.0 | 6.7% | Lithium precipitation |

Note: "$\theta$" is an angle between the long diameter direction of the particles of the anode active material and the current collector, and the measured value of the angle is the mean value of all particle angles.

EP 4 310 955 A1

As Embodiments 27-30 and Embodiments 28 and 29 show, for the anode active materials with the same particle size distribution and different width to length ratios, when the width to length ratio is bigger, the C004/C110 of the powder is smaller, the C004/C110 of the anode is less under conditions of the same magnetic flux, the angle between the long diameter of the particles of the anode active material and the current collector is bigger, and the battery expansion along the Z-axis is smaller in terms of the battery performance. This is because the particle with a bigger width to length ratio is more elongated and is more apt to rotate in a magnetic field to distribute in a direction perpendicular to the current collector.

As Embodiments 30 and 31 show, for the particles with similar width to length ratios and different particle size distributions, the bigger the particle size distribution is, the bigger the C004/C110 of the graphite particle powder is. Therefore, the bigger the C004/C110 of the anode is and the expansion growth rate along the Z-axis of the lithium-ion battery slightly increases. The width to length ratio of the particles of the anode active material in Comparative Example 3 is less than $AR_{10}$, and the C004/C110 of the anode is still big under the action of a certain magnetic flux, then the battery expansion along the Z-axis is large. Long diameters of some particles are not conducive to the de-embedding of the lithium ions. Therefore, lithium precipitation tends to occur under conditions of a certain rate.

Table 3 shows how different width to length ratios of the particles affect the battery performance when the coated anode is subject to a magnetic flux of 5000Gs.

Table 3

| | Anode active material | | | | Anode | | Lithium-ion battery | | | | |
| | Width to length ratio distribution | | | $AR_{90}/AR_{50}$ | Porosity of active material layer % | Infiltration time min | $R_{ion}$ mΩ | Ret mΩ | DCR mΩ | 5C discharge capacity retention % | Lithium precipitation test at 0°C-0.8°C |
| | $AR_{10}$ | $AR_{50}$ | $AR_{90}$ | | | | | | | | |
|---|---|---|---|---|---|---|---|---|---|---|---|
| Embodiment 38 | 0.19 | 0.35 | 0.60 | 1.71 | 41 | 0.7 | 11.5 | 38.22 | 210.5 | 96.1 | No lithium precipitation |
| Embodiment 39 | 0.10 | 0.30 | 0.50 | 1.67 | 30 | 1.8 | 15.6 | 53.20 | 223.1 | 93.2 | No lithium precipitation |
| Embodiment 40 | 0.10 | 0.39 | 0.60 | 1.50 | 35 | 1.6 | 14.7 | 48.67 | 220.7 | 93.4 | No lithium precipitation |
| Embodiment 41 | 0.15 | 0.30 | 0.50 | 1.67 | 37 | 1.4 | 14.2 | 47.23 | 220.6 | 93.8 | No lithium precipitation |
| Embodiment 42 | 0.15 | 0.39 | 0.60 | 1.50 | 40 | 0.8 | 13.3 | 46.00 | 216.8 | 94.5 | No lithium precipitation |
| Embodiment 43 | 0.19 | 0.39 | 0.60 | 1.50 | 43 | 0.5 | 12.5 | 43.40 | 213.5 | 95.8 | No lithium precipitation |
| Embodiment 44 | 0.19 | 0.39 | 0.70 | 1.75 | 45 | 0.3 | 10.3 | 35.50 | 200.2 | 96.5 | No lithium precipitation |
| Embodiment 45 | 0.10 | 0.20 | 0.40 | 2.00 | 22 | 3.0 | 18.5 | 62.99 | 235.5 | 91.1 | No lithium precipitation |

EP 4 310 955 A1

As Embodiments 39-43 show, a material with a bigger width to length ratio leads to a product with a bigger porosity in the anode active material layer under conditions of a same magnetic flux; thus, the infiltration time of electrolyte on the anode is shortened. Meanwhile, as the width to length ratio of the anode active material increases, which can reduce the transmission path during the lithium-ion transport and accelerate the rapid de-embedding of lithium ions, and it can reduce the transfer resistance of li-ion, so the lithium-ion transfer resistance (Rion), charge transfer resistance (Rct) and direct current resistance (DCR) of the lithium-ion battery containing the material decrease, and the discharge capacity retention is bigger at 5C. For Embodiment 45, its anode active material has the smallest width to length ratio; under conditions of a same magnetic flux, because some of the particles are still distributed parallel to the current collector, the anode active material layer has a smaller porosity, the electrolyte has a longer infiltration time on the anode, and the lithium ions meet greater resistance when passing through the graphite particles to embed into the graphite layer. Therefore, the magnetic flux, the width to length ratio of the particles, and the particle diameter need to be adjusted simultaneously in order to achieve the best lithium-ion battery performance in practical applications.

## Claims

1. An anode active material, wherein particles of the anode active material meet the following relationships: $0.1 \leq AR_{10} < 0.2$, $0.2 \leq AR_{50} < 0.4$, and
   Wherein $AR_{10}$ represents a width to length ratio of the anode active material when the cumulative distribution of the particle volume is 10%, and $AR_{50}$ represents the width to length ratio of the anode active material when the cumulative distribution of the particle volume is 50%.

2. The anode active material according to claim 1, wherein $0.4 \leq AR_{90} \leq 0.8$, $AR_{90}$ represents the width to length ratio of the anode active material when the cumulative distribution of the particle volume is 90%.

3. The anode active material according to claim 2, wherein $1.3 < AR_{90}/AR_{50} < 3.5$.

4. The anode active material according to claim 1, wherein the anode active material meets at least one of the conditions (a) to (d):

   (a) The anode active material meets $1.5 \leq Dv99/Dv50 \leq 4.5$;
   (b) The specific capacity of the anode active material is greater than or equal to 355mAh/g;
   (c) The ratio of the 004 crystal plane diffraction peak area C004 to the 110 crystal plane diffraction peak area C110 of the anode active material meets $10 \leq C004/C110 \leq 40$;
   (d) The compacted density of the anode active material is greater than or equal to $1.90g/cm^3$.

5. The anode active material according to claim 1, wherein the anode active material comprises artificial graphite, and the artificial graphite comprises at least one of needle coke artificial graphite, petroleum coke artificial graphite, and bitumen artificial graphite.

6. A secondary battery, comprising a cathode, a separator, an electrolyte, and an anode, the anode comprises an anode current collector and an anode active material layer, and the anode active material layer comprises the anode active material as claimed in any one of claims 1 to 5.

7. The secondary battery according to claim 6, wherein the anode comprises the particles of the anode active material; wherein a long diameter direction of the particles of the anode active material has an angle $\theta$ of $45° \leq \theta \leq 90°$ with the anode current collector.

8. The secondary battery according to claim 6, wherein the ratio of the 004 crystal plane diffraction peak area C004 to the 110 crystal plane diffraction peak area C110 is $C004/C110 \leq 15$.

9. The secondary battery according to claim 6, wherein the electrolyte infiltration time of the anode is less than or equal to 2 min.

10. An electronic device, wherein the electronic device comprises the secondary battery as claimed in any one of claims 6 to 9.

Long diameter

Angle

Current collector

FIG. 1

Lithium ions

Graphite layer

FIG. 2

## INTERNATIONAL SEARCH REPORT

| International application No. |
| --- |
| **PCT/CN2022/100001** |

### A. CLASSIFICATION OF SUBJECT MATTER

H01M 4/587(2010.01)i; H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 长径, 长宽, 宽长, 径长, 横纵, 纵横, 长短, 短长, 比, 体积, 10, 50, 90, aspect ratio, length to diameter ratio, vol, volume

### C. DOCUMENTS CONSIDERED TO BE RELEVANT

| Category* | Citation of document, with indication, where appropriate, of the relevant passages | Relevant to claim No. |
| --- | --- | --- |
| PX | CN 113437293 A (NINGDE AMPEREX TECHNOLOGY LTD.) 24 September 2021 (2021-09-24)<br>description, paragraphs [0004]-[0170] | 1-12 |
| X | CN 112689919 A (NINGDE AMPEREX TECHNOLOGY LTD.) 20 April 2021 (2021-04-20)<br>description, paragraphs [0004]-[0182] | 1, 4-12 |
| Y | CN 112689919 A (NINGDE AMPEREX TECHNOLOGY LTD.) 20 April 2021 (2021-04-20)<br>description, paragraphs [0004]-[0182] | 2, 3, 5, 7-12 |
| Y | CN 106170880 A (IMERYS GRAPHITE & CARBON SWITZERLAND LTD.) 30 November 2016 (2016-11-30)<br>description, paragraphs [0015]-[0226] | 2, 3, 5, 7-12 |
| A | CN 102290572 A (JIANGXI ZHENGTUO NEW ENERGY TECHNOLOGY CO., LTD.) 21 December 2011 (2011-12-21)<br>entire document | 1-12 |
| A | JP 2011009051 A (JFE CHEMICAL CORP.) 13 January 2011 (2011-01-13)<br>entire document | 1-12 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 August 2022** | **05 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/100001**

| Patent document cited in search report | | | Publication date (day/month/year) | Patent family member(s) | | | Publication date (day/month/year) |
|---|---|---|---|---|---|---|---|
| CN | 113437293 | A | 24 September 2021 | CN | 113437293 | B | 17 June 2022 |
| CN | 112689919 | A | 20 April 2021 | WO | 2021212481 | A1 | 28 October 2021 |
| CN | 106170880 | A | 30 November 2016 | US | 2017033360 | A1 | 02 February 2017 |
| | | | | ES | 2667211 | T3 | 10 May 2018 |
| | | | | KR | 20160145565 | A | 20 December 2016 |
| | | | | CA | 2942243 | A1 | 22 October 2015 |
| | | | | EP | 3375754 | A1 | 19 September 2018 |
| | | | | EP | 3131848 | A2 | 22 February 2017 |
| | | | | WO | 2015158741 | A2 | 22 October 2015 |
| | | | | CN | 106170880 | B | 01 December 2020 |
| | | | | JP | 6687531 | B2 | 22 April 2020 |
| CN | 102290572 | A | 21 December 2011 | CN | 102290572 | B | 25 December 2013 |
| JP | 2011009051 | A | 13 January 2011 | JP | 5322804 | B2 | 23 October 2013 |

Form PCT/ISA/210 (patent family annex) (January 2015)

**EP 4 310 955 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 245332009 T
- GB 190772016 T
- GB 245862009 T